Europäisches Patentamt

European Patent Office

Office européen des brevets

(19)

(11) **EP 0 920 351 B1**

(12) **EUROPEAN PATENT SPECIFICATION**

(45) Date of publication and mention
of the grant of the patent:
**07.11.2001 Bulletin 2001/45**

(21) Application number: **97942902.4**

(22) Date of filing: **21.08.1997**

(51) Int Cl.[7]: **B01D 53/86**

(86) International application number:
**PCT/EP97/04756**

(87) International publication number:
**WO 98/07502 (26.02.1998 Gazette 1998/08)**

(54) **PROCESS FOR REDUCING TOTAL SULPHUR CONTENT IN GASES CONTAINING HYDROGEN SULPHIDE AND OTHER SULPHUR COMPONENTS**

VERFAHREN ZUR REDUKTION DES SCHWEFELGEHALTS IN SCHWEFELWASSERSTOFF UND ANDERE SCHWEFELVERBINDUNGEN ENTHALTENDEN GASEN

PROCEDE DE REDUCTION DE LA TENEUR TOTALE EN SOUFRE DES GAZ CONTENANT DU SULFURE D'HYDROGENE ET D'AUTRES COMPOSANTS DE SOUFRE

(84) Designated Contracting States:
**AT BE CH DE DK ES FI FR GB GR IE IT LI NL PT SE**

(30) Priority: **22.08.1996 EP 96202341**

(43) Date of publication of application:
**09.06.1999 Bulletin 1999/23**

(73) Proprietor: **SHELL INTERNATIONALE RESEARCH MAATSCHAPPIJ B.V.**
**2596 HR Den Haag (NL)**

(72) Inventors:
- **VAN DEN BRINK, Peter, John**
  **NL-1031 CM Amsterdam (NL)**
- **HUISMAN, Hans, Michiel**
  **NL-1031 CM Amsterdam (NL)**
- **STEGENGA, Sander**
  **NL-1031 CM Amsterdam (NL)**

(56) References cited:
**EP-A- 0 140 191**          **FR-A- 2 105 755**
**NL-A- 8 800 525**

## Description

The present invention relates to a process for reducing the total sulphur content of gases which contain hydrogen sulphide and other sulphur components, for instance off-gases of sulphur recovery processes, such as a Claus process.

Gases containing substantial amounts of hydrogen sulphide ($H_2S$) are suitably treated in a Claus sulphur recovery process. The acid feed gas to such Claus process usually contains more than 80 volume % of $H_2S$, and often stems at least partially from hydrodesulphurisation processes. Hydrodesulphurisation processes are gas purification processes wherein industrial gases, such as refinery gas, natural gas or synthesis gas, are treated with hydrogen to reduce the level of sulphur constituents therein, yielding a $H_2S$ containing gas as by-product. As is commonly known in the art, in the Claus process $H_2S$ is first partially combusted to form sulphur dioxide ($SO_2$) in a thermal zone, after which most of the $H_2S$ left is reacted with $SO_2$ in one or more subsequent catalytic zones to form elemental sulphur and water. Claus units can typically reach a sulphur recovery efficiency (i.e. sulphur yield in % by weight on the sulphur present in the acid feed gas) of between 94 and 96% by weight, which implies that the off-gas of a Claus unit still contains some $H_2S$. Other components present in such Claus off-gas normally are sulphur dioxide, elemental sulphur, and minor quantities of carbonyl sulphide (COS) and carbon disulphide ($CS_2$)) (hereinafter collectively referred to as "other sulphur components", but without excluding any other sulphur compounds from this definition), hydrogen, nitrogen, water vapour, carbon dioxide ($CO_2$) and some carbon monoxide (CO). This Claus off-gas, consequently, has to undergo a subsequent treatment in order to further reduce the total sulphur content. The present invention relates to an improved process for such a subsequent treatment.

The document FR-A-2 105 755 describes the contacting of a gas containing $H_2S$ and other sulfur components with a hydrogenation catalyst comprising a metal selected from GROUPS VIB and VIII and then contacting the gas with a catalyst capable of catalysing the hydrolysis of carbonyl sulphide to hydrogen sulphide and then removing hydrogen sulphide. As carrier for the hydrogenation catalyst a mixture of silica and alumina is mentioned.

A known method for reducing the level of sulphur components in a Claus off-gas is disclosed in UK patent specification No. SB-A-1,356,289. According to this method the Claus off-gas is subjected to a catalytic reduction treatment at a temperature above 175 °C using a reducing gas comprising hydrogen and/or carbon monoxide, thereby converting the other sulphur components present into $H_2S$, and subsequently removing the bulk of $H_2S$ by an absorption treatment using a suitable $H_2S$-selective absorption solvent. The catalyst used for reducing the Claus off-gas comprises a Group VI metal and/or a Group VIII metal supported on an inorganic oxide carrier and typically is a NiMo/alumina or a CoMo/alumina catalyst. After the absorption treatment, the absorption solvent containing the bulk of the $H_2S$ is regenerated. The desorbed $H_2S$ thus obtained is returned to the Claus sulphur recovery, whilst the regenerated solvent is re-used. The final off-gas from the absorption treatment contains only minor amounts of $H_2S$ and is released into the atmosphere, optionally after an incineration treatment for further reducing the $H_2S$ content by converting $H_2S$ into $SO_2$. Nowadays, such incineration is almost always applied in view of more stringent air pollution and stench regulations.

In the reduction stage of the known process the main reactions are the hydrogenation of $CS_2$, $SO_2$ and $S_x$ (x having a value of from 1 to 8) present in the Claus off-gas to form $H_2S$ and the hydrolysis of COS and $CS_2$ to form $H_2S$ and $CO_2$. CO present in the reducing gas may suitably react with water to form $CO_2$ and $H_2$, but the CO present may also react with $SO_2$, $H_2S$ and/or $S_x$ forming COS which obviously is undesired. Hydrogenation and hydrolysis, accordingly, take place in a single process step using a single catalyst. In commercial operation the temperature in the reduction stage typically is between 280 and 330 °C. These high temperatures, namely, favour high rates of the hydrogenation reactions of $SO_2$ and $S_x$, thus ensuring quantitative hydrogenation of $SO_2$ and $S_x$. These high temperatures furthermore prevent the elemental sulphur from condensing and adsorbing onto the catalyst active surface, which would cause serious fouling and hence rapid deactivation of the catalyst. The Claus off-gas typically having a temperature in the range of from 130 to 200 °C, has to be heated to the high temperature applied, which is normally attained by using an in-line burner. In such in-line burner part of the reducing gas may also be formed.

A drawback of the high temperature applied in the reduction stage is that the hydrolysis of COS into $H_2S$ and CO is favoured by lower temperatures. It would, accordingly, be advantageous if a lower temperature could be applied in the reduction stage, because in that case the COS present is more quantitatively hydrolysed into $H_2S$, thus resulting in a lower COS content in the final product gas. At the same time, however, the lower temperature should not result in a decreased conversion of $CS_2$, $SO_2$ and $S_x$ into $H_2S$, whilst fouling of the catalyst due to sulphur condensation and adsorption should also be prevented as much as possible. An additional advantage of a lower reaction temperature would be that an expensive in-line burner for heating the feed gas to the required temperature could be dispensed with and, for instance, be replaced by a much less expensive heat exchanger. The absence of said in-line burner would also imply that no fuel is needed anymore, whilst it would also be advantageous for reasons of process control. In existing units the in-line burner already present will not normally be replaced by a heat exchanger for cost reasons, but if it would be possible to apply a lower operating temperature in the reduction stage, fuel consumption of the in-line burner would be less resulting in reduced operating costs. Yet another advantage of a lower operating temperature is that effective integration with a Claus unit, particularly with a three stage Claus unit, would be possible. It will be understood that such integration is very beneficial from a process economics point of view.

The problem of a high hydrogenation reaction temperature on the one hand and the hydrolysis of COS being favoured by lower temperatures on the other hand was also recognised in John A Ray et al., Oil & Gas Journal, July 14, 1986, pp. 54-57. In this article a two-step process for converting sulphur compounds present in an off-gas is disclosed comprising a first hydrogenation step using a CoMo/alumina catalyst and a second hydrolysis step for converting COS into $H_2S$ using a promoted Cr/alumina catalyst. The inlet temperature for the hydrogenation reactor is between about 300 and 350 °C, thus necessitating the use of an in-line burner for heating the off-gas feed, whilst the hydrolysis step is carried out at 177 °C. Consequently, the effluent from the hydrogenation step is cooled prior to entering the hydrolysis reactor. In the article, however, there is also described a process configuration wherein a split loading of CoMo/alumina hydrogenation catalyst and promoted Cr/alumina hydrolysis catalyst in a volume ratio of 75/25 is used, thus dispensing with the intermediate cooling step. The overall temperature applied in this configuration is 343 °C. A drawback of the split loading configuration is that the beneficial effects of a low reaction temperature on the COS hydrolysis equilibrium no longer can be enjoyed. Furthermore, in both configurations disclosed an expensive in-line burner is required to attain the necessary high reaction temperature.

The present invention aims to provide a process for reducing the total sulphur content of a hydrogen sulphide-containing gas, such as a Claus off-gas, which can be carried out at relatively low temperatures whilst at the same time effectively reducing the total sulphur content in the gas treated. It has been found that this can be realised by employing a process using a dedicated hydrogenation catalyst function based on an amorphous silica-alumina carrier and a dedicated hydrolysis catalyst function.

Accordingly, the present invention relates to a process for reducing the total sulphur content of a gas containing hydrogen sulphide and other sulphur components, which process comprises:

(a) contacting the gas with a reducing gas in the presence of a hydrogenation catalyst comprising at least one metal component selected from Groups VIB and VIII supported on a carrier comprising amorphous silica-alumina,
(b) contacting at least part of the gas obtained from step (a) with a catalyst capable of catalysing the hydrolysis of carbonyl sulphide to form hydrogen sulphide, and
(c) removing hydrogen sulphide from the gas obtained from step (b), thus obtaining a product gas having a reduced total sulphur content.

The expression "(total) sulphur content" as used throughout the present application refers to the content of all sulphur-containing compounds together present in a gas, unless specifically mentioned otherwise.

The carrier of the hydrogenation catalyst used in step (a) comprises amorphous silica-alumina. The amorphous silica-alumina used suitably has an alumina content in the range of from 5 to 75% by weight, preferably 10 to 60% by weight. In addition to the amorphous silica-alumina, the carrier may also suitably comprise a binder. Typical binder materials are inorganic oxides, such as silica and alumina, of which alumina is preferred for the purpose of the present invention. If present, the binder may be used in amounts varying from 10 to 90% by weight, preferably 20 to 80% by weight, based on total weight of carrier. The total pore volume of the amorphous silica-alumina containing carrier suitably ranges from 0.3 to 1.5 ml/g (as determined by mercury intrusion porosimetry, ASTM D 4284-88), more preferably from 0.4 to 1.2 ml/g, whilst its surface area suitably is at least 150 $m^2$/g, more suitably from 250 to 600 $m^2$/g. It will be understood that after incorporation of the catalytically active metals into the catalyst carrier, pore volume and surface area of the finished catalyst will be lower than those of the carrier per se.

The metal component of the hydrogenation catalyst comprises at least one Group VIB metal component and/or at least one Group VIII metal component. The Group VIII metal component includes non-noble Group VIII metals like nickel (Ni) and cobalt (Co) as well as the noble Group VIII metals platinum (Pt) and palladium (Pd). Suitable Group VIB metals, for instance, are molybdenum (Mo) and tungsten (W). The hydrogenation catalyst, then, suitably comprises a combination of Mo and/or W as the Group VIB metal with Ni and/or Co as the Group VIII metal. Alternatively, it may suitably comprise Pt and/or Pd as the Group VIII metal, optionally in combination with a Group VIB metal, such as W. Preferred metal components of the hydrogenation catalyst are those comprising Pt only or Pd only and those comprising one of the combinations PtPd, NiW, NiMo, CoMo and PdW. These metals may be present in elemental form, as oxide, as sulphide or as a combination of two or more of these forms. Normally, however, the non-noble metals are at least partially present in sulphided form, as in that form the metals have the highest resistance against the sulphur constituents present in the gas to be treated. The Group VIB metal component is suitably present in an amount of from 1 to 35% by weight, preferably from 5 to 25% by weight, and a non-noble Group VIII metal component in an amount of from 0.5 to 15% by weight, preferably from 1 to 10% by weight. If present, the amount of the noble Group VIII metals Pt and/or Pd suitably ranges from 0.1 to 10% by weight, more preferably from 0.2 to 6% by weight. All weight percentages are indicating the amount of metal based on total weight of carrier.

As a result of using a hydrogenation catalyst based on an amorphous silica-alumina carrier, the temperature at which the hydrogenation can be carried out can be lowered to a value within the range of from 150 to 250 °C, more preferably 175 to 220 °C, thus making it possible to dispense with an in-line burner for heating the feed gas or, in case of existing installations, to reduce the amount of thermal energy to be provided by the in-line burner. The pressure in the hydrogenation step will normally range from 0.7 to 2 bar. The reducing gas used should at least contain hydrogen and/or carbon monoxide. In terms of reducing capacity, namely, carbon monoxide is equivalent to hydrogen, as it is able to form hydrogen in situ upon reaction with water according to the reaction equation:

$$CO + H_2O \Leftrightarrow CO_2 + H_2$$

The reducing gas to be supplied should suitably at least provide the stoichiometric quantity of hydrogen and/or carbon monoxide required to completely convert $SO_2$ and $S_x$ present in the feed gas into $H_2S$. Usually, however, between 1.2 and 2.0 times the stoichiometric quantity of hydrogen and/or carbon monoxide is supplied. Larger quantities may be supplied, but this is not practical for economic reasons mainly. Although the Claus off-gas already contains some hydrogen and carbon monoxide, additional hydrogen- and/or carbon monoxide-containing gas is normally supplied in order to ensure that indeed sufficient hydrogen and/or carbon monoxide is present for completely converting $CS_2$, $SO_2$ and $S_x$ present in the feed gas into $H_2S$. A very suitable way to attain the additional supply is by sub-stoichiometric operation of an in-line burner, e.g. one operated in a preceding Claus unit, thereby forming hydrogen and carbon monoxide.

In step (b) of the process according to the present invention hydrolysis takes place by contacting at least part of the reduced or hydrogenated gas obtained from step (a) with a catalyst capable of catalysing the hydrolysis of COS to form $H_2S$. This implies that no intermediate treatment, such as cooling, takes place between steps (a) and (b). As the hydrolysis catalyst any catalyst which is known in the art to catalyse the hydrolysis of COS may be used. The hydrolysis catalyst should preferably not promote any reaction yielding COS, such as the sour gas shift reaction:

$$H_2S + CO \Leftrightarrow H_2 + COS$$

It is known that particularly (Brønstedt) basic hydroxyl groups, such as those present on inorganic oxides like alumina and titania, catalyse the COS hydrolysis reaction. Hence, non-promoted alumina, titania or mixtures thereof may suitably be applied as hydrolysis catalyst in step (b) of the present process. Optionally, basic compounds, such as cerium oxide ($CeO_2$), zirconium oxide ($ZrO_2$), alkali metal oxides ($Na_2O$, $K_2O$) and/or hydroxides (NaOH, KOH) and alkaline earth metal oxides (BaO, MgO, CaO) and/or hydroxides ($Ba(OH)_2$, $Mg(OH)_2$, $Ca(OH)_2$) may be added. If present at all, such basic compounds suitably constitute from 0.1 to 20% by weight, preferably from 1 to 15% by weight, of the hydrolysis catalyst calculated as metal. For the purpose of the present invention a hydrolysis catalyst comprising alumina and $CeO_2$ and a catalyst comprising potassium-doped titania (i.e. comprising titania and KOH and/or $K_2O$) have been found particularly useful. The effluent gas from step (a) normally comprises sufficient water vapour, i.e. at least the required stoichiometric amount, for hydrolysing the COS and any $CS_2$ present.

The catalysts used in steps (a) and (b) are suitably sulphided prior to operating the process according to the present invention. Such pre-sulphiding may be performed by methods known in the art, for instance according to the methods disclosed in European patent applications Nos. EP-A-181,254; EP-A-329,499; EP-A-448,435 and EP-A-564,317 and International patent applications Nos. WO 93/02793 and WO 94/25157. It is preferred in the process according to the present invention that the non-noble catalytically active metals are at least partly present in the catalyst as sulphides, so that the catalytically active metals have a high resistance against the sulphur constituents present in the gas to be treated.

Reaction conditions in terms of temperature and pressure as applied in step (b) are within the same ranges as applied in the preceding step (a) and hence include operating temperatures of from 150 to 250 °C, more preferably 175 to 220 °C, and pressures in the range of from 0.7 to 2 bar.

Steps (a) and (b) of the process according to the present invention can be carried out in several configurations. For instance, step (a) and step (b) may be carried out in two separate reactors. Although this is a relatively expensive option, it provides optimal flexibility in terms of process control and therefore may be desirable to apply. Particularly, if an existing two reactor configuration is available for modification, this configuration may be very attractive.

Steps (a) and (b) may also be carried out in a single reactor. It will be appreciated that from a cost perspective this is very attractive. One very suitable single reactor configuration is a stacked bed consisting of a bed of hydrogenation catalyst and a bed of hydrolysis catalyst. In this stacked bed configuration the two beds are arranged in such manner that the feed gas is first passed through the bed of hydrogenation catalyst and subsequently through the bed of hydrolysis catalyst. The feed gas may pass through the reactor either in an upward or in a downward direction, whilst a side flow may also be applied. The volume ratio of hydrogenation catalyst bed to hydrolysis catalyst bed is predominantly determined by the amount of sulphur constituents to be hydrogenated into $H_2S$ and the amount of COS to be hydrolysed. Generally, the volume ratio of hydrogenation catalyst bed to hydrolysis catalyst bed will be in the range of from 50:50 to 95:5, preferably from 60:40 to 90:10.

Another suitable single reactor configuration is a configuration, wherein the single reactor comprises at least one bed, preferably one bed, consisting of a mixture of hydrogenation catalyst particles and hydrolysis catalyst particles. Such mixture may be a completely random mixture of both catalysts, but also may be a mixture wherein the concentration of hydrogenation catalyst gradually decreases in the direction of the flow of feed gas. The sulphur-containing molecules present in the feed gas, which are to be hydrogenated to form $H_2S$, will always meet a hydrogenation catalyst particle somewhere in the catalyst bed, whilst any COS (and $CS_2$) molecule present in the feed gas or formed by reduction of $CS_2$, $SO_2$ or $S_x$ with CO upon contact with the hydrogenation catalyst, will meet a hydrolysis catalyst particle. The volume ratio of hydrogenation catalyst particles to hydrolysis catalyst particles in a mixed catalyst bed will be in the range of from 50:50 to 99:1, preferably from 65:35 to 95:5, more preferably from 60:40 to 90:10. A combination of stacked bed and mixed catalyst may also be applied. Such combination may, for instance, comprise in the direction of the flow of feed gas a bed of hydrogenation catalyst and a bed containing a mixture of hydrogenation catalyst and hydrolysis catalyst, optionally with a decreasing concentration of hydrogenation catalyst in the direction of the gas flow. Another suitable combination is a mixed bed, preferably with a decreasing concentration of hydrogenation catalyst in the direction of the gas flow, in combination with a bed of hydrolysis catalyst. For these combinations the same overall volume ratio of hydrogenation catalyst to hydrolysis catalyst applies.

In stead of the physical blend of hydrogenation catalyst particles and hydrolysis catalyst particles as described above, the mixture of both catalysts may also be in the form of a single catalyst comprising both a hydrogenation function and a hydrolysis function. In this way molecules on a microscale will also meet the appropriate catalyst function. In this configuration a bed of dedicated hydrolysis catalyst is suitably present downstream of the bed of the catalyst "mixture". Such catalyst combining the hydrogenation and hydrolysis function in a single catalyst particle is suitably prepared by co-extruding the dedicated hydrogenation catalyst based on the amorphous silica-alumina and a dedicated hydrolysis catalyst.

In certain cases it may be desired to contact the feed gas with a bed of hydrolysis catalyst prior to subjecting it to step (a) of the process according to the present invention. This may, for instance, conveniently be achieved by arranging a bed of hydrolysis catalyst upstream of the bed comprising the hydrogenation catalyst. Such preceding hydrolysis treatment may be particularly useful when the feed gas contains substantial amounts (i.e. more than 500 ppmv) of $CS_2$. Upon contact with a hydrogenation catalyst, namely, $CS_2$ may react with hydrogen to form mercaptans, which are difficult to convert further into $H_2S$. In view of the unpleasant odour of mercaptans and the fact that in a subsequent incineration treatment they contribute to the amount of $SO_2$ released into the air, it is preferred to keep the level of mercaptans formed as low as possible. By first contacting the $CS_2$-containing feed gas with a hydrolysis catalyst, $CS_2$ is hydrolysed to form COS, which is readily further hydrolysed into $H_2S$. In this way the $CS_2$ content is strongly reduced prior to contact with the hydrogenation catalyst, so that any formation of mercaptans is effectively prevented. In case of a single reactor configuration any preceding hydrolysis may suitably be effected by arranging a bed of hydrolysis catalyst, preferably the same catalyst as used in step (b) of the present process, upstream of the bed comprising the hydrogenation catalyst. In case of a stacked bed process this implies that the stacked bed is extended with a third bed upstream of the original two-bed arrangement. The volume of such possible initial hydrolysis catalyst bed relative to the subsequent catalyst beds is determined by the $CS_2$ content of the feed gas, but will normally range from 1:99 to 30:70, preferably from 5:95 to 20:80.

Particles size of the catalyst particles to be used in the process according to the present invention may range within wide limits and are those commonly applied and commercially available. Suitable particle sizes, then, are diameters of from 0.5 mm to 15 mm, more suitably 1 to 5 mm. The catalyst particles may be used in any shape known in the art, such as spheres, wheels, tri-lobes and quadru-lobes, but may also be used in a crushed form.

In step (c) of the process according to the present invention the $H_2S$ present in the effluent gas from step (b) is removed, thus obtaining a product gas having a reduced sulphur content. Removal of $H_2S$ from the sour gas obtained in step (b) can be achieved by various methods known in the art. Chemical absorption processes using liquid $H_2S$-selective absorbents are widely used and very suitable for the purpose of the present invention. Frequently applied absorbents include aqueous solutions of alkanolamines, such as mono-ethanolamine, diethanolamine, di-isopropanolamine, and aqueous mixtures of di-isopropanolamine or methyldiethanolamine and sulfolane. Generally, such absorption treatment involves an absorption step, in which the $H_2S$-containing gas is contacted with the liquid absorbent in an absorption column, and a regeneration step, in which the $H_2S$ is again removed from the absorbent. The desorbed $H_2S$ thus obtained is normally returned to the Claus sulphur recovery process, whilst the regenerated absorbent is recycled to the absorption column. The final off-gas from the absorption treatment is now often subjected to a thermal or catalytic incineration treatment for converting the minor amounts of $H_2S$ still present with oxygen into $SO_2$, after which the incinerated gas is released into the air.

Alternatively, step (c) may involve a method for removing $H_2S$ from the product gas obtained in step (b) by reacting the $H_2S$ with an aqueous solution of a polyvalent metal ion or chelate in a redox reaction to form elemental sulphur and a reduced state of the polyvalent metal ion or chelate, which in a subsequent regeneration step is converted back into the original polyvalent metal ion or chelate by reacting it with a suitable oxidising agent, such as oxygen. Iron is generally applied as the polyvalent metal, whilst suitable chelating agents include ethylenediamine tetraacetic acid (EDTA) and nitrilotriacetic acid (NTA). Phosphate and thiosulphate ions, or precursors thereof, may be present in the initial redox mixture for increasing the size of the sulphur crystals formed. The elemental sulphur formed is recovered from the aqueous reaction mixture. Examples of such $H_2S$ removal processes are, for instance, disclosed in European Patent Applications Nos. EP-A-0,066,310; EP-A-0,152,647; EP-A-0,186,235 and EP-A-0,215,505.

As has been indicated hereinabove, it is an advantage of the process according to the present invention that effective integration with a Claus unit, particularly with a three stage Claus unit, is possible due to the lower operating temperature applied. Such integration could typically involve loading the last reactor in such a Claus unit with the hydrogenation catalyst and the hydrolysis catalyst used in steps (a) and (b), respectively, of the present process. This is evidently very attractive from a process economics point of view.

The invention is further illustrated by the following example without restricting the scope of the invention to this particular embodiment.

Example

A gas consisting of 500 ppmv (parts per million on a volume basis) COS, 750 ppmv $S_x$, 10,000 ppmv $H_2S$, 250 ppmv $CS_2$, 2000 ppmv $SO_2$, 25 vol% $H_2O$, 10,000 ppmv $H_2$ and 5000 ppmv CO was passed in an upward direction over a pre-sulphided stacked bed (total volume 625 ml) consisting of a bed of hydrogenation catalyst below a bed of hydrolysis catalyst in a volume ratio of 90:10.

The hydrogenation catalyst used comprised 4.3% by weight of Ni and 13.0% by weight of Mo supported on an amorphous silica-alumina carrier having an alumina content of 55% by weight. The carrier had a total pore volume (Hg) of 0.82 ml/g and a surface area of 440 $m^2$/g. The finished catalyst had a total pore volume (Hg) of 0.64 ml/g and a surface area of 240 $m^2$/g.

The hydrolysis catalyst was a potassium-doped titania catalyst containing 2% by weight of KOH prior to pre-sulphiding.

The particles of both catalysts used were crushed particles having a diameter between 0.5 and 1.0 mm.

Process conditions involved a reactor temperature of 210 °C, a pressure of 1.2 bar and a gaseous hourly space velocity of 1500 $h^{-1}$.

Composition of the reactor effluent (the "reduced gas") was determined with gas chromatography and infrared spectroscopy. For the purpose of this determination a sample of the reduced gas was dried and analysed. Prior to drying the reduced gas had a water content of 3.77 vol%. Results are indicated in Table I.

After cooling, this reduced gas was subsequently treated in an absorber system using an aqueous mixture of methyldiethanolamine and sulfolane as the absorption solvent. Feed gas pressure was 1.05 bar and feed gas temperature was 29.5 °C.

Composition of the product gas was determined with gas chromatography and infra-red spectroscopy. Results are indicated in Table I.

All amounts given in Table I are on the basis of dry gas.

TABLE I

| Reduction of total sulphur content | | | |
| --- | --- | --- | --- |
| Component | Feed gas | Reduced gas | Product gas |
| COS (ppmv) | 667 | 200 | 199 |
| $SO_2$ (ppmv) | 2,667 | 25 | - |
| $H_2S$ (ppmv) | 13,333 | 18,900 | 528 |
| $CO_2$ (vol%) | 0 | 0.3 | 27.1 |
| $S_x$ (ppmv) | 1,000 | | |
| $CS_2$ (ppmv) | 333 | | |

From Table I it can be seen that the sulphur constituents present in the feed are effectively converted into $H_2S$, 97.2% of which is subsequently removed in the absorption step. Moreover, the reduction and hydrolysis reactions are carried out effectively at a temperature of 210 °C, which is substantially lower than the temperatures employed in the processes of the state of the art (280-350 °C).

## EP 0 920 351 B1

### Claims

1. Process for reducing the total sulphur content of a gas containing hydrogen sulphide and other sulphur components, which process comprises:

   (a) contacting the gas with a reducing gas in the presence of a hydrogenation catalyst comprising at least one metal component selected from Groups VIB and VIII supported on a carrier comprising amorphous silica-alumina,
   (b) contacting at least part of the gas obtained from step (a) with a hydrolysis catalyst capable of catalysing the hydrolysis of carbonyl sulphide to form hydrogen sulphide, and
   (c) removing hydrogen sulphide from the gas obtained from step (b), thus obtaining a product gas having a reduced total sulphur content.

2. Process according to claim 1, wherein the amorphous silica-alumina has an alumina content in the range of from 5 to 75% by weight, preferably 10 to 60% by weight.

3. Process according to claim 1 or 2, wherein the amorphous silica-alumina containing carrier has a total pore volume in the range of from 0.3 to 1.5 ml/g, preferably from 0.4 to 1.2 ml/g.

4. Process according to any of claims 1 to 3, wherein the hydrogenation catalyst comprises a combination of molybdenum and/or tungsten as the Group VIB metal with nickel and/or cobalt as the Group VIII metal.

5. Process according to any of claims 1 to 3, wherein the hydrogenation catalyst comprises platinum and/or palladium as the Group VIII metal.

6. Process according to any of claims 1 to 5, wherein the hydrolysis catalyst used in step (b) is a catalyst comprising $CeO_2$ and alumina or is a catalyst comprising potassium-doped titania.

7. Process according to any of claims 1 to 6, wherein step (a) and step (b) are carried out in a single reactor.

8. Process according to claim 7, wherein the single reactor comprises a stacked bed consisting of a bed of hydrogenation catalyst and a bed of hydrolysis catalyst.

9. Process according to claim 7, wherein the single reactor comprises at least one bed consisting of a mixture of hydrogenation catalyst and hydrolysis catalyst.

10. Process according to any of the preceding claims, wherein the hydrogen sulphide-containing gas prior to step (a) is contacted with a hydrolysis catalyst.

### Revendications

1. Procédé pour réduire la teneur en soufre totale d'un gaz contenant de l'hydrogène sulfuré et d'autres composants soufrés, lequel procédé comprend :

   (a) la mise en contact du gaz avec un gaz réducteur en présence d'un catalyseur d'hydrogénation comprenant au moins un composant de métal choisi parmi les Groupes VIB et VIII fixé sur un support comprenant de la silice-alumine amorphe,
   (b) la mise en contact d'au moins une partie du gaz obtenu de l'étape

   (a) avec un catalyseur d'hydrolyse pouvant catalyser l'hydrolyse de sulfure de carbonyle pour former de l'hydrogène sulfuré, et
   (c) la séparation d'hydrogène sulfuré du gaz obtenu de l'étape (b), en obtenant ainsi un produit gazeux ayant une teneur en soufre totale réduite.

2. Procédé suivant la revendication 1, dans lequel la silice-alumine amorphe a une teneur en alumine allant de 5 à 75 % en poids, avantageusement de 10 à 60 % en poids.

**3.** Procédé suivant l'une ou l'autre des revendications 1 et 2, dans lequel le support contenant de la silice-alumine amorphe a un volume des pores total allant de 0,3 à 1,5 ml/g, avantageusement de 0,4 à 1,2 ml/g.

**4.** Procédé suivant l'une quelconque des revendications 1 à 3, dans lequel le catalyseur d'hydrogénation comprend une combinaison de molybdène et/ou de tungstène comme métal du Groupe VIB avec du nickel et/ou du cobalt comme métal du Groupe VIII.

**5.** Procédé suivant l'une quelconque des revendications 1 à 3, dans lequel le catalyseur d'hydrogénation comprend du platine et/ou du palladium comme métal du Groupe VIII.

**6.** Procédé suivant l'une quelconque des revendications 1 à 5, dans lequel le catalyseur d'hydrolyse utilisé dans l'étape (b) est un catalyseur comprenant du $CeO_2$ et de l'alumine ou est un catalyseur comprenant de l'oxyde de titane dopé au potassium.

**7.** Procédé suivant l'une quelconque des revendications 1 à 6, dans lequel l'étape (a) et l'étape (b) sont réalisées dans un seul réacteur.

**8.** Procédé suivant la revendication 7, dans lequel le réacteur isolé comprend un lit empilé constitué d'un lit de catalyseur d'hydrogénation et d'un lit de catalyseur d'hydrolyse.

**9.** Procédé suivant la revendication 7, dans lequel le réacteur isolé comprend au moins un lit constitué d'un mélange de catalyseur d'hydrogénation et de catalyseur d'hydrolyse.

**10.** Procédé suivant l'une quelconque des revendications précédentes, dans lequel le gaz contenant de l'hydrogène sulfuré avant l'étape (a) est mis en contact avec un catalyseur d'hydrolyse.


**Patentansprüche**

**1.** Verfahren zur Verringerung des Gesamtschwefelgehaltes eines Schwefelwasserstoff und andere Schwefelkomponenten enthaltenden Gases, welches Verfahren umfaßt:

(a) Inkontaktbringen des Gases mit einem reduzierenden Gas in Gegenwart eines Hydrierkatalysators, der wenigstens eine Metallkomponente, ausgewählt aus den Gruppen VIB und VIII, aufgebracht auf einen amorphes Siliziumoxid-Aluminiumoxid umfassenden Träger, umfaßt,
(b) Inkontaktbringen wenigstens eines Teiles des aus Stufe (a) erhaltenen Gases mit einem Katalysator, der zum Katalysieren der Hydrolyse von Carbonylsulfid zur Ausbildung von Schwefelwasserstoff befähigt ist, und
(c) Abtrennen von Schwefelwasserstoff aus dem aus Stufe (b) erhaltenen Gas, unter Gewinnung eines Produktgases mit einem verringerten Gesamtschwefelgehalt.

**2.** Verfahren nach Anspruch 1, worin das amorphe Siliziumoxid-Aluminiumoxid einen Aluminiumoxidgehalt im Bereich von 5 bis 75 Gew.-%, vorzugsweise 10 bis 60 Gew.-% aufweist.

**3.** Verfahren nach Anspruch 1 oder 2, worin der amorphes Siliziumoxid-Aluminiumoxid enthaltende Träger ein Gesamtporenvolumen im Bereich von 0,3 bis 1,5 ml/g, vorzugsweise von 0,4 bis 1,2 ml/g aufweist.

**4.** Verfahren nach einem der Ansprüche 1 bis 3, worin der Hydrierkatalysator eine Kombination aus Molybdän und/oder Wolfram als dem Gruppe VIB-Metall mit Nickel und/oder Cobalt als dem Gruppe VIII-Metall umfaßt.

**5.** Verfahren nach einem der Ansprüche 1 bis 3, worin der Hydrierkatalysator Platin und/oder Palladium als das Gruppe VIII-Metall umfaßt.

**6.** Verfahren nach einem der Ansprüche 1 bis 5, worin der in Stufe (b) eingesetzte Hydrolysekatalysator ein Katalysator ist, der $CeO_2$ und Aluminiumoxid umfaßt, oder ein Katalysator ist, der mit Kalium dotiertes Titanoxid umfaßt.

**7.** Verfahren nach einem der Ansprüche 1 bis 6, worin die Stufen (a) und (b) in einem einzigen Reaktor ausgeführt werden.

**8.** Verfahren nach Anspruch 7, worin der einzige Reaktor ein Stapelbett umfaßt, bestehend aus einem Bett aus Hydrierkatalysator und einem Bett aus Hydrolysekatalysator.

**9.** Verfahren nach Anspruch 7, worin der einzige Reaktor wenigstens ein Bett umfaßt, das aus einem Gemisch aus Hydrierkatalysator und Hydrolysekatalysator besteht.

**10.** Verfahren nach einem der vorstehenden Ansprüche, worin das schwefelwasserstoffhältige Gas vor der Stufe (a) mit einem Hydrolysekatalysator in Kontakt gebracht wird.